# EUROPÄISCHE PATENTSCHRIFT

(11) **EP 2 707 657 B1**
(45) Veröffentlichungstag und Bekanntmachung des Hinweises auf die Patenterteilung: **29.07.2015**
(21) Anmeldenummer: 12733649.3
(22) Anmeldetag: 29.06.2012
(51) Int. Cl.: F24J 2/07, F24J 2/48, F24J 2/05

(54) **SOLAR-RECEIVER FÜR EINE SOLARTHERMIE-ANLAGE UND SOLARTHERMIE-ANLAGE**
SOLAR RECEIVER FOR A SOLAR THERMAL SYSTEM, AND SOLAR THERMAL SYSTEM
RÉCEPTEUR SOLAIRE CONÇU POUR UNE INSTALLATION HÉLIOTHERMIQUE ET INSTALLATION HÉLIOTHERMIQUE

(30) Priorität: 01.07.2011 DE 102011078522
(43) Veröffentlichungstag der Anmeldung: 19.03.2014
(73) Patentinhaber: Siemens Aktiengesellschaft, 80333 München (DE)
(72) Erfinder: HOWELL, Philip Clissold, 85521 Riemerling (DE); WALTER, Steffen, 85667 Oberpframmern (DE)
(86) Internationale Anmeldenummer: PCT/EP2012/062702
(87) Internationale Veröffentlichungsnummer: WO 2013/004616

(56) Entgegenhaltungen:
- WO-A1-02/103257
- WO-A1-2009/051595
- DE-A1- 2 538 300
- DE-A1-102007 062 876
- US-A- 5 523 132

## Beschreibung

Die Erfindung betrifft einen Solarreceiver für eine Solarthermieanlage und eine Solarthermieanlage.

In Solarthermieanlagen wird Sonnenlicht über Reflektoren gesammelt und auf einen Solarreceiver gebündelt. Die Solarreceiver weisen ein Absorbermaterial auf, welches das gebündelte Sonnenlicht absorbiert und infolge der dabei aufgenommenen Solarenenergie einen Wärmeträger im Inneren des Solarreceivers erwärmt.

Jedoch wird bei Solarthermieanlagen nicht allein der Wärmeträger erwärmt. Zusätzlich wird auch der Solarreceiver samt Absorbermaterial selbst erwärmt, sodass der Solarreceiver Wärmestrahlung an die Umgebung emittiert. Diese Emission von Wärmestrahlung verringert den energetischen Wirkungsgrad eines Solarreceivers und damit den Wirkungsgrad einer Solarthermieanlage. Die Emission von Wärmestrahlung durch den Absorber an die Umgebung soll daher möglichst gering gehalten werden.

Es sind Solarreceiver bekannt, die bei solch niedrigen Temperaturen betrieben werden, dass die durch den Absorber emittierte Wärmestrahlung und die Strahlung des Sonnenlichts spektral hinreichend getrennt sind. So trifft von der Sonne üblicherweise Strahlung im Wellenlängenbereich von 0,3 µm bis 2,5 µm auf die Erdoberfläche. Der Solarreceiver hingegen weist im Betrieb eine Temperatur von typischerweise 350°C oder 400°C auf und emittiert daher Wärmestrahlung etwa im Wellenlängenbereich von 2 bis 20 µm oder 1,5 bis 20 µm. In solchen Fällen lässt sich der Absorber hinsichtlich des Absorbermaterials als spektral selektiver Absorber ausbilden, d.h. das Material bildet bei Wellenlängen der Sonnenstrahlung einen guten Absorber und bei Wellenlängen der Wärmestrahlung einen schlechten Emitter.

Bei höheren Betriebstemperaturen von Solarreceivern jedoch sind die Spektren von einfallendem Sonnenlichts und der Wärmestrahlung des Absorbers nicht hinreichend getrennt. Folglich geben bekannte Absorbermaterialen bislang bei großen Wellenlängen unerwünscht viel Wärmeenergie ab und/oder absorbieren im Spektralbereich des Sonnenlichts unerwünscht wenig Strahlungsenergie. Hinsichtlich des Absorbermaterials allein weisen Solarreceiver folglich eine zu geringe Energieausbeute auf oder arbeiten nicht genügend verlustarm.

Daher ist es bislang erforderlich, Absorbermaterialien mit Schichtstrukturen optisch dünner Materialien zu versehen, mit welchen die Emission und/oder Absorption von Strahlung durch Interferenzeffekte beeinflusst wird. So ist es beispielsweise bekannt, Solarreceiver mit Braggspiegeln zu versehen. Jedoch ist auch bei Solarreceivern mit Schichtstruktur das spektrale Emissions- und/oder Absorptionsprofil nicht beliebig einstellbar, sondern ist durch den Einstellungsgrad der optischen Eigenschaften der einzelnen Schichtmaterialien sowie durch die Anzahl der Schichten begrenzt.

Alternativ zu solchen Schichtstrukturen weisen bekannte Solarreceiver, siehe z.B. WO-A-2009051595 eine einzelne Cermet-Schicht zur Nutzung von Interferenzeffekten auf. Eine solche Cermet-Schicht, also eine Schicht aus einem Keramik-Metall- oder Keramik-Metalloxid-Verbundstoff, weist dabei Inseln aus Metall oder Metalloxid in einer Keramikschicht auf. An diesen Inseln wird in die Cermet-Schicht eindringende elektromagnetische Strahlung gestreut. Die von verschiedenen Inseln gestreute Strahlung kann dabei bei zweckmäßiger Wahl des mittleren Abstandes dieser Inseln geeignet interferieren.

Es ist daher Aufgabe der Erfindung, einen verbesserten Solarreceiver für Solarthermieanlagen zu schaffen. Insbesondere soll der Solarreceiver eine höhere Energieausbeute aufweisen. Es ist ferner Aufgabe der Erfindung, eine gegenüber dem Stand der Technik verbesserte Solarthermieanlage mit verbesserter Energieausbeute zu schaffen.

Diese Aufgabe wird mit einem Solarreceiver mit den in Anspruch 1 angegebenen Merkmalen sowie mit einer Solarthermieanlage mit den in Anspruch 12 angegebenen Merkmalen gelöst. Bevorzugte Weiterbildungen der Erfindung ergeben sich aus den zugehörigen Unteransprüchen, der nachfolgenden Beschreibung und der Zeichnung.

Der erfindungsgemäße Solarreceiver für eine Solarthermieanlage ist mit Ytterbiumhexaborid (YbB₆) gebildet. Zweckmäßig bildet dabei Ytterbiumhexaborid ein Absorbermaterial des erfindungsgemäßen Solarreceivers. Der erfindungsgemäße Solarreceiver lässt sich verglichen mit Solarreceivern gemäß dem Stand der Technik besonders verlustarm und mit hoher Energieausbeute ausbilden.

So kann eine erhöhte Energieausbeute von Solarreceivern in Solarthermieanlagen gerade dann erreicht werden, wenn der Solarreceiver mit einer höheren Betriebstemperatur betreibbar ist. Aufgrund der daraus resultierenden höheren Temperatur des Wärmeträgers ergibt sich nämlich eine deutlich höhere Energieausbeute in der Stromerzeugung.

Eine besonders hohe Energieausbeute eines Solarreceivers erfordert Betriebstemperaturen des Solarreceivers von 500°C und mehr. Bislang bekannte Absorbermaterialien weisen jedoch Emissivitätskanten bei 2,0 µm bis 2,5 µm auf, das heißt erst bei Wellenlängen jenseits von 2 µm wird die Emission von Wärmestrahlung des Absorbermaterials hinreichend effizient unterdrückt. Da die Emission von Wärmestrahlung jedoch von der Temperatur abhängt, lassen sich bekannte Absorbermaterialien lediglich bis zu einer Temperatur von 450°C effizient betreiben. Denn bei höheren Temperaturen tritt auch bei kleineren Wellenlängen verglichen mit der spektralen Lage der vorgenannten Emissivitätskanten derart viel Wärmestrahlung auf, dass die dadurch bedingten Energieverluste eine effiziente Ausbildung von Solarreceivern verhindern.

Ytterbiumhexaborid hingegen weist eine Emissivitätskante bei einer Wellenlänge auf, welche deutlich kleiner als 2 µm ist. So besitzt Ytterbiumhexaborid eine scharfe Emissivitätskante bei 1,5 µm, wobei die Reflektivität von Ytterbiumhexaborid bei Wellenlängen größer als 2 µm 0,8 und größer sowie bei Wellenlängen kleiner als 1,5 µm 0,2 und kleiner ist. Folglich ist Ytterbiumhexaborid hinsichtlich seiner spektralen Emissions- und Absorptionseigenschaften deutlich besser an das Erfordernis hoher Betriebstemperaturen von Solarreceivern angepasst. Entsprechend lässt sich ein Solarreceiver mit Ytterbiumhexaborid bei deutlich höheren Betriebstemperaturen, insbesondere bei Temperaturen von größer/gleich 500°C und vorzugsweise bei Temperaturen von größer/gleich 600°C hinsichtlich der Emissions- und Absorptionsbilanz und folglich mit hoher Energieausbeute betreiben. Zudem weist Ytterbiumhexaborid, auch bei den vorgenannten Betriebstemperaturen, eine deutlich höhere thermische Stabilität auf. Mit anderen Worten, Ytterbiumhexaborid bildet einen spektral deutlich verbesserten selektiven Absorber verglichen mit bekannten selektiven Absorbern bei hohen Absorbertemperaturen.

In einer bevorzugten Weiterbildung der Erfindung weist der Solarreceiver eine, insbesondere mit Cermet gebildete, Schicht oder eine Schichtstruktur auf.

Insbesondere weist der Solarreceiver einen Braggspiegel auf, wobei der Braggspiegel vorzugsweise Teil einer Schichtstruktur wie vorstehend erwähnt ist. Durch eine solche Schichtstruktur mit einem Braggspiegel lässt sich die Emissivität, das heißt die Wärmeabstrahlung, bei Wellenlängen jenseits der Emissivitätskante weiter reduzieren. Entsprechend ist die Energieausbeute des erfindungsgemäßen Solarreceivers in dieser Weiterbildung der Erfindung weiter erhöht.

Ebenfalls bevorzugt ist anstelle eines Braggspiegels eine Schichtstruktur aus genau zwei Schichten vorhanden. Dabei sind zweckmäßigerweise Geometrie und Materialparameter dieser Schichten, insbesondere ihre Dicken und Brechungsindices, derart gewählt, dass das die Emissivität des Absorbers weiter erhöht ist.

In einer ebenfalls bevorzugten Weiterbildung der Erfindung ist bei dem erfindungsgemäßen Solarreceiver anstelle oder zusätzlich zur Schichtstruktur eine einzelne Schicht vorhanden. Insbesondere ist die Schicht eine Cermet-Schicht, d.h. eine Schicht mit einem Keramik-Metall- oder Keramik-Metalloxid-Verbundstoff. Zweckmäßig weist die Cermet-Schicht mit Metall gebildete Inseln in einer Keramikschicht und/oder mit Keramik gebildete Inseln in einer Metall- oder Metalloxidschicht auf. In dieser Weiterbildung der Erfindung wird die in die Cermet-Schicht eindringende Strahlung an den Inseln der Cermet-Schicht gestreut. Zweckmäßig ist der mittlere Abstand und vorzugsweise auch die Verteilung der Abstände der Inseln voneinander derart gewählt, dass die Emissivität des Absorbers bei Wellenlängen der Wärmestrahlung herabgesetzt ist.

Bevorzugt bildet dabei zumindest ein Teil des Ytterbiumhexaborids des Solarreceivers zumindest einen Teil der Schicht oder der Schichtstruktur. Zweckmäßig ist dieser Teil innerhalb der Schichtstruktur gelegen und bildet insbesondere die innerste Schicht der Schichtstruktur. Weiter bevorzugt ist dieser Teil bevorzugt vollumfänglich von der Schicht oder Schichtstruktur umgeben. Auf diese Weise kann die Schichtstruktur als Spektralfilter ausgebildet werden, welcher die Emissivität der bei Wellenlängen der auftretenden Wärmestrahlung des Solarreceivers weiter reduziert. Grundsätzlich kann dabei der Wellenlängenbereich, in dem die Emissivität weiter reduziert ist, durch die Parameter der Schichtstruktur in an sich bekannter Weise frei gewählt werden. Gerade bei der erfindungsgemäßen Lösung kann die Schicht oder Schichtstruktur jedoch besonders vorteilhaft, insbesondere besonders einfach, etwa mit besonders wenigen oder nicht perfekt präzise ausgebildeten Schichten ausgebildet sein, da das Emissivitätsspektrum von Ytterbiumhexaborid bereits besonders geeignet an da Spektrum eines idealen selektiven Absorbers angepasst ist. Somit sind die technischen Anforderungen an die Ausbildung des Schichtsystems oder der Schicht in dieser Weiterbildung der Erfindung gegenüber dem Stand der Technik deutlich reduziert. Insbesondere ist die Schichtstruktur erfindungsgemäß mit gegenüber dem Stand der Technik verringerter Anzahl von Schichten oder mit einer dünneren Schicht wie etwa einer Cermet-Schicht ausbildbar, so dass die Herstellungskosten deutlich reduziert sind. Ferner bedeuten die verringerten Anforderungen an die Ausbildung der Schicht oder Schichtstruktur, dass eine deutlich breitere Auswahl an Materialien zur Ausbildung der Schicht oder Schichtstruktur herangezogen werden kann. Daher lässt sich die Schichtstruktur geeignet an weitere technische oder wirtschaftliche Erfordernisse anpassen. Insbesondere kann eine Anpassung hinsichtlich der thermischen Stabilität oder hinsichtlich verringerter Herstellungskosten erfolgen.

Vorteilhaft ist der erfindungsgemäße Solarreceiver mit nicht oder schwach und/oder langsam oxidierendem Material gebildet und insbesondere beschichtet und/oder der Solarreceiver weist eine Beschichtung mit oder aus nicht oder schwach und/oder langsam oxidierendem Material auf. Besonders zweckmäßig und alternativ oder zusätzlich zu den vorhergehend beschriebenen Solarreceivern mit Schichtstruktur ist zumindest ein Teil der Schichtstruktur des Solarreceivers, zumindest eine außen liegende Schicht der Schichtstruktur, mit oder aus nicht oder schwach und/oder langsam oxidierendem Material gebildet, vorzugsweise aus Ytterbiumhexaborid. So oxidiert Ytterbiumhexaborid bei Temperaturen von mindestens 700°C in Sauerstoff kaum. Bislang bekannte Beschichtungen oder Schichten von Absorbermaterial in Solarreceivern reagieren im Vergleich hierzu mit Sauerstoff bei üblichen Betriebstemperaturen stark. Dazu muss bislang das Absorbermaterial des Receivers gekapselt und auf Hochvakuum evakuiert werden. Typischerweise muss das Vakuum für eine Lebensdauer von circa 20 Jahren in hohem Maße erhalten bleiben. Ist jedoch eine Beschichtung oder Schicht und/oder Schichtstruktur des Absorbermaterials mit nicht oder schwach und/oder langsam oxidierendem Material gebildet, so ist eine Kapselung und Evakuierung des Absorbermaterials entbehrlich.

Gerade infolge der deutlich vergrößerten Auswahlmöglichkeiten für Materialien zur Ausbildung der Schicht oder Schichtstruktur wie zuvor erläutert, lassen sich erfindungsgemäß auch geeignete nicht oder schwach und/oder langsam oxidierende Materialien zur Bildung des Solarreceivers heranziehen. In diesem Zusammenhang bedeuten schwach und/oder langsam oxidierende Materialien solche Materialien, welche über einen Zeitraum von mindestens einem, bevorzugt mindestens fünf und insbesondere zumindest 20, Jahren bei einer Temperatur von 500°C, bevorzugt 600°C, und idealerweise 700°C in Sauerstoff stabil sind.

Bevorzugt weist der erfindungsgemäße Solarreceiver eine im sichtbaren Spektralbereich transparente Kammer auf, wobei das Ytterbiumhexaborid zumindest zum Teil und vorzugsweise vollständig in der Kammer angeordnet ist. Auf diese Weise können Konvektionsverluste und damit Effizienzverluste deutlich reduziert werden. Geeigneterweise ist die transparente Kammer dabei zumindest zum Teil zylindrisch und/oder rohrförmig ausgebildet. Zweckmäßigerweise ist die Kammer in an sich bekannter Weise mit Glas gebildet.

Vorteilhaft ist die im sichtbaren Spektralbereich transparente Kammer zumindest zum Teil gasevakuiert. Auf diese Weise lassen sich Konvektionsverluste und damit Effizienzverluste eines Solarreceivers sowie einer mit dem erfindungsgemäßen Solarreceiver gebildeten Solarthermieanlage deutlich reduzieren. Dabei bedeutet "zumindest zum Teil gasevakuiert" in diesem Zusammenhang, dass zumindest ein Teil der Kammer gasevakuiert und/oder von zumindest einer Komponente eines Gases oder eines Gasgemisches evakuiert, insbesondere sauerstoffevakuiert ist. In letztgenannter Weiterbildung der Erfindung lassen sich auch schneller und/oder stärker oxidierende Materialien in an sich bekannter Weise einsetzen.

Die erfindungsgemäße Solarthermieanlage weist einen Solarreceiver, wie er zuvor beschrieben worden ist, auf. Die erfindungsgemäße Solarthermieanlage ist folglich verglichen mit dem Stand der Technik mit hoher Energieausbeute ausbildbar.

Idealerweise ist die erfindungsgemäße Solarthermieanlage zum Betrieb des Solarreceivers bei Temperaturen von größer/gleich 500°C und insbesondere bei Temperaturen von größer/gleich 600°C und besonders vorteilhaft bei Temperaturen von größer/gleich 700°C ausgebildet. Zweckmäßig sind Kollektorflächen, Bündelungsgrad und geometrische Abmessungen des Solarreceivers bei der erfindungsgemäßen Solarthermieanlage zur Erreichung einer oder mehrerer der vorgenannten Temperaturen, etwa in der Art einer oder mehreren vorgesehenen Betriebstemperaturen ausgebildet.

Die Eignung von Ytterbiumhexaborid als selektiver Absorber wird nachfolgend anhand der Zeichnung näher erläutert.

Die einzige Zeichnungsfigur 1 zeigt ein Reflektivitätsspektrum von Ytterbiumhexaborid (YbB₆) (modifiziert entnommen aus "Incandescent lamp with filament consisting of a hexaboride of a rare earth material", E. Kauer, US Patent 3399321).

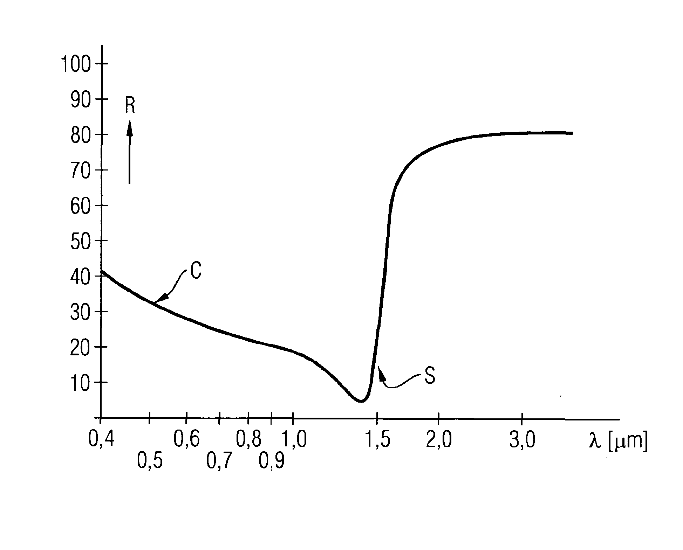

Die Reflektivität R von Ytterbiumhexaborid ist in Fig. 1 in Abhängigkeit von der Wellenlänge λ elektromagnetischer Strahlung als durchgezogene Kurve C gezeigt. Die Angabe der Reflektivität R ist in Fig. 1 an der Hochachse in Prozent angegeben. Wie in Fig. 1 dargestellt weist Ytterbiumhexaborid bei Wellenlängen λ (Abszissenachse, aufgetragen in µm, in der Zeichnung durch die Angabe "[µm]" verdeutlicht) kleiner als 1,5 µm eine geringe Reflektivität R auf (R ist kleiner/gleich 40 Prozent im sichtbaren Spektralbereich und kleiner/gleich 20 Prozent für Wellenlängen kleiner 1,5 µm und größer/gleich 1 µm).

Die Reflektivität R steht in an sich bekannter Weise mit der Emissivität E über den Zusammenhang

R= 1-E (1)

in Beziehung.

Folglich weist Ytterbiumhexaborid bei Wellenlängen λ kleiner als 1,5 µm eine hohe Emissivität (Emissivität größer/gleich 60 Prozent) auf. Die Absorptanz von Ytterbiumhexaborid ist eine zur Emissivität von Ytterbiumhexaborid identische Größe. Folglich weist Ytterbiumhexaborid bei Wellenlängen kleiner als 1,5 µm eine hohe Absorptanz auf. Ytterbiumhexaborid bildet also im genannten Wellenlängenbereich einen effizienter Absorber.

Wie der Zeichnung entnehmbar sind für Wellenlängen größer/gleich 1,5 µm die Reflektivität (R≈80% für Wellenlängen größer/gleich 2 µm) groß und die Emissivität folglich äußerst klein. Entsprechend bildet Ytterbiumhexaborid zugleich einen schlechten, wenig effizienten Emitter für Strahlung im Bereich von Wellenlängen λ größer/gleich 1,5 µm und insbesondere von Wellenlängen λ größer/gleich 2 µm, also für Strahlung im Bereich der Wärmestrahlung.

Die spektralen Bereiche hoher und geringer Reflektivität R und folglich die spektralen Bereiche von geringer und hoher Emissivität und Absorptanz von Ytterbiumhexaborid sind, wie in Fig. 1 dargestellt, durch eine spektral scharfe Emissivitätskante S, welche bei Wellenlängen λ um 1,5 µm gelegen ist, miteinander verbunden. Im Bereich der Emissivitätskante S hängen Emissivität und Absorptanz von Ytterbiumhexaborid sehr stark von der Wellenlänge λ ab.

## Patentansprüche

1. Solarreceiver für eine Solarthermieanlage,
**dadurch gekennzeichnet,**
**dass** er mit Ytterbiumhexaborid gebildet ist.

2. Solarreceiver nach Anspruch 1,
**dadurch gekennzeichnet,**
**dass** er eine, insbesondere mit Cermet gebildete, Schicht oder eine Schichtstruktur aufweist.

3. Solarreceiver nach einem der vorhergehenden Ansprüche,
**dadurch gekennzeichnet,**
**dass** er einen Braggspiegel aufweist.

4. Solarreceiver nach den Ansprüchen 2 und 3,
**dadurch gekennzeichnet,**
**dass** der Braggspiegel Teil der Schichtstruktur ist.

5. Solarreceiver nach einem der vorhergehenden Ansprüche,
**dadurch gekennzeichnet,**
**dass** zumindest ein Teil des Ytterbiumhexaborids zumindest einen Teil der Schicht oder der Schichtstruktur bildet, insbesondere einen innen liegenden Teil der Schichtstruktur.

6. Solarreceiver nach einem der vorhergehenden Ansprüche, **dadurch gekennzeichnet,**
**dass** er mit nicht oder schwach und/oder langsam oxidierendem Material gebildet, insbesondere beschichtet, ist.

7. Solarreceiver nach einem der vorhergehenden Ansprüche, **dadurch gekennzeichnet,**
**dass** er eine im sichtbaren Spektralbereich transparente Kammer aufweist und das Ytterbiumhexaborid zumindest zum Teil in der Kammer angeordnet ist.

8. Solarreceiver nach einem der vorhergehenden Ansprüche, **dadurch gekennzeichnet,**
**dass** die im sichtbaren Spektralbereich transparente Kammer zumindest zum Teil zylindrisch und/oder rohrförmig ausgebildet ist.

9. Solarreceiver nach einem der vorhergehenden Ansprüche, **dadurch gekennzeichnet,**
**dass** die im sichtbaren Spektralbereich transparente Kammer mit Glas gebildet ist.

10. Solarreceiver nach einem der vorhergehenden Ansprüche,
**dadurch gekennzeichnet,**
**dass** die im sichtbaren Spektralbereich transparente Kammer zumindest zum Teil gasevakuiert ist.

11. Solarreceiver nach einem der vorhergehenden Ansprüche,
**dadurch gekennzeichnet,**
**dass** die im sichtbaren Spektralbereich transparente Kammer zumindest zum Teil sauerstoffevakuiert ist.

12. Solarthermieanlage,
**dadurch gekennzeichnet,**
**dass** sie einen Solarreceiver nach einem der vorhergehenden Ansprüche aufweist.

13. Solarthermieanlage nach einem der vorhergehenden Ansprüche,
**dadurch gekennzeichnet,**
**dass** sie zum Betrieb des Solarreceivers bei Temperaturen von größer/gleich 500°C, insbesondere bei Temperaturen von größer/gleich 600°C, vorzugsweise bei Temperaturen von größer/gleich 700°C, ausgebildet ist.

## Claims

1. Solar receiver for a solar thermal energy system,
**characterized**
**in that** it is formed with ytterbium hexaboride.

2. Solar receiver according to Claim 1,
**characterized**
**in that** it has a layer structure or a layer, in particular formed with cermet.

3. Solar receiver according to either of the preceding claims,
**characterized**
**in that** it has a Bragg mirror.

4. Solar receiver according to Claims 2 and 3,
**characterized**
**in that** the Bragg mirror is part of the layer structure.

5. Solar receiver according to any of the preceding claims,
**characterized**
**in that** at least one part of the ytterbium hexaboride forms at least one part of the layer or of the layer structure, in particular an inner part of the layer structure.

6. Solar receiver according to any of the preceding claims,
**characterized**
**in that** it is formed, in particular coated, with non-oxidizing or weakly and/or slowly oxidizing material.

7. Solar receiver according to any of the preceding claims,
**characterized**
**in that** it has a chamber that is transparent in the visible spectral range, and the ytterbium hexaboride is arranged at least partly in the chamber.

8. Solar receiver according to any of the preceding claims,
**characterized**
**in that** the chamber that is transparent in the visible spectral range is embodied as at least partly cylindrical and/or tubular.

9. Solar receiver according to any of the preceding claims,
**characterized**
**in that** the chamber that is transparent in the visible spectral range is formed with glass.

10. Solar receiver according to any of the preceding claims,
**characterized**
**in that** the chamber that is transparent in the visible spectral range is at least partly gas-evacuated.

11. Solar receiver according to any of the preceding claims,
**characterized**
**in that** the chamber that is transparent in the visible spectral range is at least partly oxygen-evacuated.

12. Solar thermal energy system,
**characterized**
**in that** it has a solar receiver according to any of the preceding claims.

13. Solar thermal energy system according to any of the preceding claims,
**characterized**
**in that** it is designed for the operation of the solar receiver at temperatures of greater than/equal to 500ºC, in particular at temperatures of greater than/equal to 600ºC, preferably at temperatures of greater than/equal to 700ºC.

## Revendications

1. Récepteur solaire pour une installation héliothermique, **caractérisé en ce qu'**il est formé avec de l'hexaborure d'ytterbium.

2. Récepteur solaire selon la revendication 1, **caractérisé en ce qu'**il présente une couche, en particulier formée avec du cermet, ou une structure en couches.

3. Récepteur solaire selon l'une des revendications précédentes, **caractérisé en ce qu'**il présente un miroir de Bragg.

4. Récepteur solaire selon les revendications 2 et 3, **caractérisé en ce que** le miroir de Bragg est une partie de la structure en couches.

5. Récepteur solaire selon l'une des revendications précédentes, **caractérisé en ce qu'**au moins une partie de l'hexaborure d'ytterbium forme au moins une partie de la couche ou de la structure en couches, en particulier une partie intérieure de la structure en couches.

6. Récepteur solaire selon l'une des revendications précédentes, **caractérisé en ce qu'**il est formé, en particulier recouvert, avec un matériau qui ne s'oxyde pas ou s'oxyde faiblement et/ou lentement.

7. Récepteur solaire selon l'une des revendications précédentes, **caractérisé en ce qu'**il présente une chambre transparente dans le domaine visible du spectre et l'hexaborure d'ytterbium est disposé au moins en partie dans la chambre.

8. Récepteur solaire selon l'une des revendications précédentes, **caractérisé en ce que** la chambre transparente dans le domaine visible du spectre est configurée au moins en partie de manière cylindrique et/ou en forme de tube.

9. Récepteur solaire selon l'une des revendications précédentes, **caractérisé en ce que** la chambre transparente dans le domaine visible du spectre est formée avec du verre.

10. Récepteur solaire selon l'une des revendications précédentes, **caractérisé en ce que** les gaz de la chambre transparente dans le domaine visible du spectre sont au moins en partie évacués.

11. Récepteur solaire selon l'une des revendications précédentes, **caractérisé en ce que** l'oxygène de la chambre transparente dans le domaine visible du spectre est au moins en partie évacué.

12. Installation héliothermique, **caractérisée en ce qu'**elle présente un récepteur solaire selon l'une des revendications précédentes.

13. Installation héliothermique selon l'une des revendications précédentes, **caractérisée en ce qu'**elle est configurée pour un fonctionnement du récepteur solaire à des températures supérieures/égales à 500°C, en particulier à des températures supérieures/égales à 600°C, de préférence à des températures supérieures/égales à 700°C.
